# EUROPEAN PATENT APPLICATION

(11) **EP 1 713 251 A1**
(43) Date of publication of application: **18.10.2006**
(21) Application number: 05008312.0
(22) Date of filing: 15.04.2005
(51) Int. Cl.: H04N 3/233

(54) **Raster distortion correction circuit**

(71) Applicant: TTE Germany GmbH, 78048 Villingen-Schwenningen (DE)
(72) Inventor: Dieterle, Franz, 77761 Schiltach (DE)
(74) Representative: Rossmanith, Manfred

(57) **Abstract**

A deflection apparatus with raster distortion correction comprises a horizontal deflection circuit generating an S-shaped deflection current, and a modulation circuit with a resonant circuit producing a modulation current (I_{M}). That modulation current (I_{M}) modulates a voltage (U_{CS}), developed in an S-capacitor (C_{S}) in accordance with a vertical modulation signal (S_{V}). By producing the modulation current (I_{M}) a switching semiconductor (Q_{M} 4) of the resonant circuit has a first switching state during a first portion of the trace interval and a second switching state during a second portion of the trace interval. The first and second portions varies as a result of a pulse-width modulator (O_{M} 5), which is responsive to the modulation signal (S_{V}) and to a feedback signal for controlling the switching semiconductor (Q_{M} 4) in a negative feedback closed loop. A feature of the present invention is to use the voltage (U_{CS}) developed in the S-capacitor (C_{S}) as the feedback signal.

## Description

### BACKGROUND OF THE INVENTION

The present invention is related to a deflection apparatus with raster distortion correction according to the preamble of claim 1. A deflection apparatus is used for cathode ray tubes.

By providing a raster distortion correction a deflection apparatus comprises a horizontal deflection circuit, which includes generating an S-shaped deflection current and a modulation of the current's amplitude (East-West correction). In many cases an inner pincushion error remains visible when the outer pincushion error is corrected, and vice versa. As a result, an additional correction is necessary. Above all, tubes with deflection angles of about 120 degree or more need such an additional correction. The invention concerns, in particular, such an additional correction, mentioned above.

A horizontal deflection circuit appropriate for modulating the S-shape of the deflection current is already known from the US 6,586,895. The US 6,586,895 describes a deflection apparatus with raster distortion correction, which comprises a horizontal deflection circuit with a deflection winding Ly and an S-capacitor Cₛ generating the S-shaped deflection current during a trace and retrace interval. The deflection current is synchronizised, by a synchronizing signal, at a frequency related to a horizontal deflection frequency.

The deflection apparatus further comprises a modulation circuit, which is able to perform the above mentioned additional correction. The modulation circuit comprises a resonant circuit with a switching semiconductor Q_{M} and a pulse-width modulator O_{M}. By generating a modulation current I_{M}, the switching semiconductor Q_{M} is able to modulate a voltage U_{CS} at the S-capacitor C_{S}, in accordance with a modulation signal S_{V}, at a frequency related to a vertical deflection frequency. The switching semiconductor Q_{M} has a first switching state during a first portion of the trace interval and a second switching state during a second portion of the trace interval, with the first and second portions varying in accordance with the modulation signal Sᵥ. The switching semiconductor Q_{M} is controlled by the pulse-width modulator O_{M}, which is responsive to the modulation signal Sᵥ and a feedback signal.

This feedback signal is generated by a current sensor, sensing the modulation current I_{M}.

The generating of the feedback signal by sensing the modulation current I_{M} is complex, which means it needs a multi-step conversion of the current sensor signal, an opto-coupler with a high bandwidth and a floating supply voltage. In detail, the feedback signal is derived from a peak to peak detector of the modulation current I_{M}. The integration from the peak detector in the feedback path causes stability problems and a signal distortion. As a result, the modulation circuit needs two galvanic separations with a high bandwidth, one transformer for sensing the modulation current I_{M}, and one opto-coupler for a drive signal from the pulse-width modulator O_{M}. The switching semiconductor Q_{M} must be connected in parallel to the S-capacitor C_{S} and needs the floating supply voltage.

A feedback signal is needed to achieve a correction corresponding to the modulation signal Sᵥ with a good linearity. Since the changing of the voltage U_{cs} is not linear, a linear increase of the puls-width modulator O_{M} corresponding to the modulation signal Sᵥ does not result in a linear increase of the modulation current I_{M}. For this reason a feedback signal is used in order to control the switching semiconductor Q_{M} in a negative feedback loop. In detail, the feedback signal derived from the modulation current I_{M} is used to change the modulation signal Sᵥ, in a first step. The adjusted modulation signal Sᵥ is compared to a sawtooth signal generated from the synchronizing signal, in a second step.

### BRIEF SUMMARY OF THE INVENTION

It is therefore desirable to simplify the modulation circuit of the deflection apparatus and to accelerate the feedback loop.

According to the invention this can be achieved by the feature of claim 1, namely by generating the feedback signal from the voltage U_{cs} developed in the S-capacitor Cₛ. Especially the capacitor voltage U_{cs} itself can be used as the feedback signal. The generation of the feedback signal can be simplified, the feedback loop can be accelerated, and the overall inner pincushion correction can be improved.

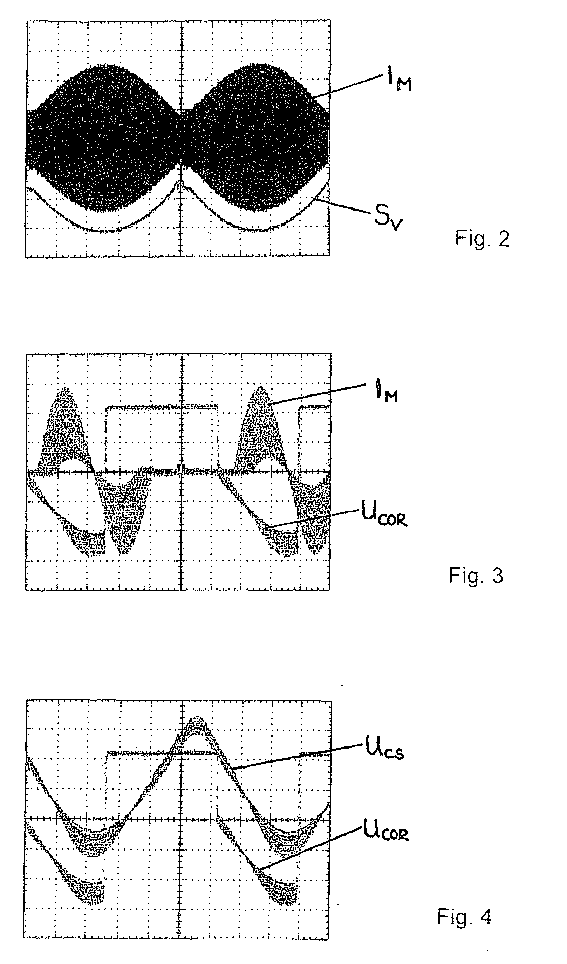

In particular the pulse-width modulator O_{M} can be responsive to the capacitor voltage U_{cs} as the feedback signal, namely the capacitor voltage U_{cs} can be used as an input signal of the pulse-width modulator O_{M}. The non-linearity of the generated modulation current I_{M} is compensated due to the non-linearity of the input signal applied by the capacitor voltage U_{cs}. By using the capacitor voltage U_{cs} itself for the pulse-width modulation, neither a multi-step conversion of the current sensor signal, nor a modulation of the modulation signal Sᵥ, nor a generation of a sawtooth signal is needed. The feedback loop is highly accelerated in comparison to a feedback loop described by the US 6,586,895, which needs several traces as a result of the integration time of the peak detector. Changes of the capacitor voltage U_{CS} due to the modulation current I_{M} immediately cause changes of the pulse-width modulator O_{M}. The peak value of the generated modulation current I_{M} exactly follows the modulation signal Sᵥ without an additional time constant (figure 2). The pulse-width modulation is able to work linear. Since the modulation circuit does not need a feedback,loop with phase changes and with an integration of the current sensor signal, it has a high stability.

Advantageous developments of the invention are specified in the dependent claims.

In order to generate the modulation current I_{M} the capacitor voltage U_{cs} can be measured by a transformer, which is coupled to the S-capacitor Cₛ and coupled to the resonant circuit.

This transformer enables the usage of the capacitor voltage U_{cs} to generate the modulation current I_{M} in a separate resonant circuit. Another purpose of the transformer is to transmit the generated modulation current I_{M} into the deflection circuit, which comprises the deflection winding L_{Y} and the S-capacitor Cₛ. Lastly, the transformer uncouples the modulation circuit from the horizontal deflection circuit.

As a result, the transformer works in both directions at the same time.

The modulation circuit does not need a transformer or a fast opto-coupler for the input signal of the pulse-width modulator O_{M}, because all parts of the circuit are grounded. A floating voltage supply is not needed.

The modulation circuit can further comprise a forming circuit with a blanking device for overlaying a blanking signal over the feedback signal for generating a formed feedback signal U_{COR}, so that the pulse-width modulator O_{M} is responsive to the formed feedback signal U_{COR}. By overlaying a blanking signal over the feedback signal the modulation circuit is simplified in comparison to a circuit, in which a first blanking signal and a second blanking signal are overlayed over the controlling signal from the pulse-width modulator O_{M}, described by the US 6,586,895.

The blanking device can comprise a differentiating device, differentiating the capacitor voltage U_{CS} for forming the blanking signal. Therefore the capacitor voltage U_{CS} can be used both as the feedback signal and for generating the blanking signal.

A deflection apparatus with raster distortion correction with a horizontal deflection circuit and an above mentioned modulation circuit can further comprise an East-West raster distortion correction circuit, responsive to a modulation signal at a frequency related to a vertical deflection frequency for providing East-West raster distortion correction. The modulation signal Sᵥ, needed for the modulation current I_{M}, can be taken from the East-West raster distortion correction circuit. One possibility is to use a signal from a switching semiconductor of the East-West raster distortion correction circuit as the modulation signal Sᵥ. The modulation signal S_{V} can have a parabolic form.

### BRIEF DESCRIPTION OF THE DRAWINGS

Further features and advantages of the present invention will become apparent from the subsequent description of embodiments thereof, referring to the appended drawings. It shows:

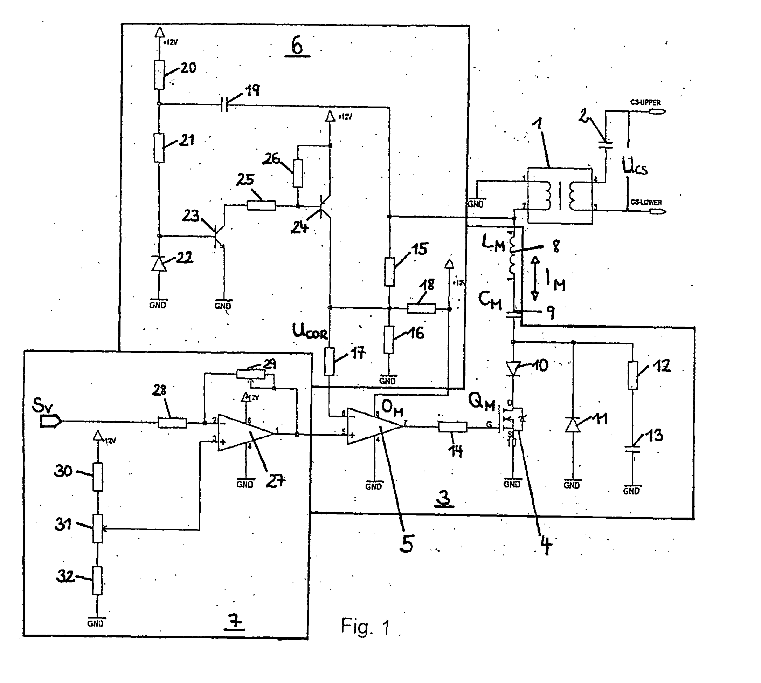

- Figure 1: a simplified schematic diagram of a modulation circuit of a deflection apparatus with the inventive features;
- Figure 2: peak values of a modulation current I_{M} and a modulation signal S_{V};
- Figure 3: the modulation current I_{M} and a formed feedback signal U_{COR}; and
- Figure 4: a voltage over the S-capacitor U_{cs} compared to the formed feedback signal U_{COR}.

### DETAILED DESCRIPTION OF THE INVENTION

A deflection apparatus with raster distortion correction comprises, not pictured, a horizontal deflection circuit with a deflection winding L_{Y} and an S-capacitor C_{S} generating an S-shaped deflection current during a trace and retrace interval, and pictured, a modulation circuit.

The modulation circuit of the example of the invention comprises a transformer 1 for transmitting a voltage U_{CS} at the S-capacitor C_{S}. This transformer 1 is coupled over a capacitor 2 to the capacitor C_{S}. The modulation circuit further comprises a resonant circuit 3 for producing a modulation current I_{M} with a switching semiconductor Q_{M} 4 and a pulse-width modulator O_{M} 5. The pulse-width modulator O_{M} 5 is responsive to a modulation signal Sᵥ and to a formed feedback signal U_{COR} and controls the switching semiconductor Q_{M} 4. The modulation circuit further comprises a forming circuit 6 for generating the formed feedback signal U_{COR} using the capacitor voltage U_{cs}, and a transmitting circuit 7 for the modulation signal Sᵥ.

The resonant circuit 3 further comprises a modulation inductance L_{M} 8 and a modulation capacitor C_{M} 9, serial coupled with each other and with the switching semiconductor Q_{M} 4. This switching semiconductor Q_{M} 4 is applied by a MOS-FET and secured by a diode 10. Parallel to the switching semiconductor Q_{M} 4 with the diode 10 a further diode 11 is coupled. A resistance 12 is coupled in series with a capacitor 13, which also runs parallel. The pulse-width modulator O_{M} 5, which is applied by an operational amplifier, is coupled over a resistance 14 to a gate of the switching semiconductor Q_{M} 4.

So far the resonant circuit itself corresponds to a resonant circuit described in the US 6,586,895. It differs in that it is coupled over the transformer 1 to the horizontal deflecting circuit.

By generating a suitable input signal for the pulse-width modulator O_{M} 5 the inverted voltage U_{cs}, which is optained from the transformer 1, is processed in the forming circuit 6. The forming circuit 6 comprises a voltage divider with resistances 15 and 16 and resistances 17 and 18. The resistance 15 is coupled to the transformer 1 and the resistance 16 is coupled over the resistance 17 to the inverting input of the pulse-width modulator O_{M} 5. A feedback signal is generated, which is synchronous and proportional to the voltage U_{CS}.

By overlaying a blanking signal over the feedback signal, the forming circuit 6 further comprises a blanking device with a capacitor 19, resistances 20 and 21, a diode 22, transistors 23 and 24 and resistances 25 and 26. The blanking signal is generated in differentiating the voltage U_{CS} by a differentiating device, applied by the capacitor 19 and the resistance 20, and adding an offset due to the resistance 20. As a result of the transistor 23 a positive value of that differentiated and shifted voltage U_{CS} starts the blanking signal. The blanking signal is amplified in an amplifier, applied by the transistors 23 and 24, and transmitted over the resistance 17 to the inverting input of the pulse-width modulator O_{M} 5. A blanking signal during the second portion of the trace and during the retrace, in which the values of that differentiated and shifted voltage U_{CS} are positive, is generated.

A formed feedback signal U_{COR}, which is synchronised by the voltage U_{CS}, and is proportional to the voltage U_{CS} in the first portion of the trace and acts as a blanking signal during the second portion of the trace and during the retrace, is generated. This signal is chosen as the input signal of the pulse-width moderator O_{M} 5.

For transmitting that modulation signal Sᵥ, the transmitting circuit 7 comprises an operational amplifier 27, which is coupled to the pulse-width modulator O_{M} 5. The modulation signal Sᵥ is coupled over a resistance 28 to the inverting input of the operational amplifier 27. Thereby the operational amplifier 27 is an inverter and comprises an adjustable gain due to a resistance 29 and an adjustable DC level as a result of resistances 30, 31 and 32. The gain can be adjusted from 1 to 0.

The pulse-width modulator O_{M} 5 compares the parabola modulation signal Sᵥ with the formed feedback signal U_{COR}. During the first portion of the trace the pulse-width modulator O_{M} 5 compares a value of the signal Sᵥ with changing values of the actual voltage U_{cs}. The pulse-width modulator O_{M} 5 starts a drive pulse for the switching semiconductor Q_{M} 4 when the formed feedback signal U_{COR} begins to be lower than the signal Sᵥ. The switching semiconductor Q_{M} 4 is switched on and generates a half sine wave current I_{M} through the modulation inductance L_{M} 8 and the modulation capacitor C_{M} 9. During the second portion of the trace, due to the blanking signal, the switching semiconductor Q_{M} 4 is switched off. The current I_{M} is taken over by the diode 11. A second half sine wave current I_{M} is generated. The length and the amplitude of the sine wave modulation current I_{M} depend on the comparison of the signal S_{V} with the signal U_{COR}, in particular, with its voltage U_{CS} part (figures 3 and 4).

The diode 11 and the diode 10 are only needed if the internal diode of the MOS-FET of the switching semiconductor Q_{M} 4 is not fast enough at the switch-off point. The resistance 12 is coupled in series with the capacitor 13 in order to form a damping circuit to avoid oscillation when neither the switching semiconductor Q_{M} 4 nor the diode 11 are conductive.

The transformer 1 enables the transmittance of the voltage U_{CS} from the horizontal deflecting circuit into the modulation circuit and, at the same time, it enables the transmittance of the modulation current I_{M} vice versa. A primary inductance and a ferrite core size of the transformer 1 can be designed favourably, so that the current in the primary inductance, which is generated due to the voltage U_{CS}, is lower than its saturation current. The current in the primary inductance has to be lower than the saturation current, even when the current is increased due to the capacitor voltage U_{cs}, increased by the injected modulation current I_{M}.

The capacitor 2 is used only for decoupling the system voltage from the transformer 1. A high capacitor value is preferred in order to enable a low voltage across the transformer 1 and to keep the size of the transformer 1 as small as possible. The operating voltage and the current of the switching semiconductor Q_{M} 4 may be determined by the winding ratio of the transformer 1. In this example the ratio 1:1 has been chosen to use a 200V transistor for the switching semiconductor Q_{M} 4. Such transistors are generally used in horizontal deflection circuits, i.e. in a East-West raster distortion correction circuit.

Figure 2 shows that the peak values of the modulation current I_{M} follows exactly the modulation signal Sᵥ, namely the two curves are parallel. The modulation due to the modulation signal S_{V} is linear, there is no distortion of the linearity. Values of the formed feedback signals U_{COR} are shown with values of the modulation current I_{M} in figure 3 and with values of the capacitor voltage U_{CS} in figure 4. The influence of the first part of the formed feedback signal U_{COR} to the modulation current I_{M} could be seen in figure 3. Figure 4 demonstrates that the first part of the formed feedback signal U_{COR} follows exactly the capacitor voltage U_{cs} and that its second part is determined by the blanking signal.

## Claims

1. A deflection apparatus with raster distortion correction,
comprising:
a horizontal deflection circuit with a deflection winding (L_{Y}) and an S-capacitor (C_{S}) generating an S-shaped deflection current during a trace and retrace interval, and
a modulation circuit
with a resonant circuit
with a switching semiconductor (Q_{M} 4) and a pulse-width modulator (O_{M} 5),
the switching semiconductor (Q_{M} 4) producing a modulation current (I_{M}) in the resonant circuit and in the S-capacitor (Cs),
that modulation current (I_{M}) modulates a voltage (U_{cs}) developed in the S-capacitor (C_{S}), in accordance with a modulation signal (Sᵥ), at a frequency related to a vertical deflection frequency,
the switching semiconductor (Q_{M} 4) having a first switching state during a first portion of the trace interval and a second switching state during a second portion of the trace interval,
the first and second portions varying in accordance with the modulation signal (S_{V}),
the pulse-width modulator (O_{M} 5) being responsive to the modulation signal (Sᵥ) and to a feedback signal for controlling the switching semiconductor (Q_{M} 4) in a negative feedback closed loop,
**characterised in that**
the feedback signal is generated from the voltage (U_{cs}) developed in the S-capacitor (Cₛ).

2. The deflection apparatus according to claim 1, **characterised in that** the modulation circuit further comprises a transformer (1) coupled to the S-capacitor (Cₛ) and coupled to the resonant circuit for transmitting the voltage (U_{CS}) from the horizontal deflection circuit into the modulation circuit and for transmitting the modulation current (I_{M}) vice versa.

3. The deflection apparatus according to claim 1 or 2, further comprising a generation of one or more blanking signals, which act in the second portion of the trace interval and in the retrace interval, **characterised in that** the modulation circuit further comprises a forming circuit (6) with a blanking device for generating and overlaying one blanking signal over the feedback signal for generating a formed feedback signal (U_{COR}), and **in that** the pulse-width modulator (O_{M} 5) is responsive to the formed feedback signal (U_{COR}).

4. The deflection apparatus according to claim 3, **characterised in that** the blanking device comprises a differentiating device differentiating the capacitor voltage (UCS) for forming the blanking signal.
